# NEUE EUROPÄISCHE PATENTSCHRIFT

(11) **EP 3 024 638 B2**
(45) Veröffentlichungstag und Bekanntmachung des Hinweises auf die Entscheidung über den Einspruch: **18.11.2020**
(45) Hinweis auf die Patenterteilung: 12.07.2017
(21) Anmeldenummer: 14755785.4
(22) Anmeldetag: 25.07.2014
(51) Int. Cl.: B29C 70/00

(54) **VERFAHREN ZUR ENDKONTURGETREUEN HERSTELLUNG MECHANISCH HOCH BELASTBARER KUNSTSTOFF-BAUTEILE**
METHOD FOR PRODUCING PLASTIC COMPONENTS, WHICH HAVE A HIGH MECHANICAL LOAD-BEARING CAPACITY, WITH A CORRECT FINAL CONTOUR
PROCÉDÉ PERMETTANT DE FABRIQUER AVEC PRÉCISION QUANT À LEUR CONTOUR FINAL DES PIÈCES EN MATIÈRE PLASTIQUE POUVANT SUPPORTER DES CONTRAINTES MÉCANIQUES ÉLEVÉES

(30) Priorität: 26.07.2013 DE 102013107991
(43) Veröffentlichungstag der Anmeldung: 01.06.2016
(73) Patentinhaber: KraussMaffei Technologies GmbH, 80997 München (DE)
(72) Erfinder: SCHNEEBAUER, Martin, 81675 München (DE); WUERTELE, Martin, 86316 Friedberg (DE)
(74) Vertreter: Wilhelm, Ludwig
(86) Internationale Anmeldenummer: PCT/EP2014/066114
(87) Internationale Veröffentlichungsnummer: WO 2015/011289

(56) Entgegenhaltungen:
- EP-A1- 2 113 429
- WO-A1-2011/072739
- WO-A1-2013/053612
- WO-A2-2014/076227
- DE-A1-102005 006 794
- DE-A1-102010 034 858
- JP-A- H0 952 256
- JP-A- 2001 145 936
- JP-A- 2001 150 483
- US-A- 5 034 173

## Beschreibung

Die vorliegende Erfindung betrifft ein Verfahren zur endkonturgetreuen Herstellung mechanisch hoch belastbarer Kunststoff-Bauteile.

Mechanisch hoch belastbare Kunststoff-Bauteile werden vorzugsweise aus duroplastischen Werkstoffen hergestellt. Diese Werkstoffe sind im Spritzgießvorgang durch sehr dünnflüssige bzw. niedrig viskose Reaktiv-Materialien gekennzeichnet, was eine starke Tendenz zur Ausbildung von Graten zumindest an einer Werkzeugtrennebene zwischen den einzelnen Komponenten eines jeweiligen Spritzgießwerkzeugs hervorruft.

Eine weitere mechanische Ertüchtigung erfahren duroplastische Werkstoffe bei Verwendung in Kombination mit Fasern als sog. Faserverbundbauteile. Faserverbundbauteile umfassen mit einer bettenden Matrix sowie verstärkenden Fasern im Allgemeinen nur zwei Hauptkomponenten. Durch gegenseitige Wechselwirkungen dieser beiden Komponenten erhält ein Faserverbundbauteil höherwertige Eigenschaften als jede der beiden einzeln beteiligten Komponenten. Die extrem dünnen und sehr zugfesten Fasern tragen dabei durch ihre Dichte und gezielte Ausrichtung ihrer Filamente ganz wesentlich zur Festigkeit eines maßgeschneiderten Faserverbundbauteils bei.

Nachfolgend wird als ein Verfahren zur Herstellung mechanisch hoch belastbarer Kunststoff-Bauteile auch auf das Resin Transfer Moulding- bzw. kurz RTM-Verfahren zur Herstellung faserverstärkter Kunststoffbauteile Bezug genommen, ohne dass die vorliegende Erfindung auf diesen Anwendungsfall beschränkt wird. Die Herstellung von Bauteilen aus einem Duroplast-Werkstoff erfolgt im RTM-Verfahren bei Bauteilen mit komplexer Geometrie über sog. Preforms. Unter Preforms versteht man vorgefertigte Faser-Körper, die nachfolgend in ein geöffnetes Werkzeug eingelegt werden. Der Preform wird dabei i.d.R. über die Ränder der fertigen Bauteil-Kavität des Werkzeugs gelegt und das Textil ragt dementsprechend in die Trennebene des Werkzeugs. Eine Abdichtung in der Trennebene erfolgt in einem bekannten Verfahren dann über eine umlaufende Dichtschnur, die zuvor separat in die Form einzulegen ist. Diese Technik ermöglicht sehr homogene Permeabilität in der Textilstruktur beim Imprägnieren des Textils mit der Matrix.

Beeinflusst wird das Imprägnieren des Textils durch die Viskosität des Harzsystems und die Permeabilität des Fasermaterials. Die Temperatur des Formwerkzeugs und/oder des Harzes bestimmen neben der Durchlässigkeit des Fasermaterials die Fließwege, wodurch sich das Imprägnieren des Textils optimieren lässt. Eine gratfreie, endkonturnahe Fertigung ist mit einer Variation dieser Parameter jedoch nicht erreichbar.

Die Fertigung von RTM-Bauteilen ist mit einem hohen produktionstechnischen Aufwand verbunden. Dabei muss neben dem aufwändigen Preform-Prozess das Bauteil nach der Harzinfusion und dem Aushärten noch nachträglich bearbeitet und in die Endkontur gebracht werden. Dieser Beschnitt erfolgt häufig mit Laserstrahlschneiden oder Wasserstrahlschneiden, wobei ausgehärteter Faser-Kunststoff-Verbund bzw. kurz FKV als Verschnittmaterial anfällt, welches mit den Recyclingverfahren aus dem Stand der Technik kaum wieder verwertet werden kann. Dieser zusätzliche Fertigungsschritt bedeutet auch höhere Bauteilkosten.

Nach dem Beschneiden des Bauteils liegen die scharfen Kanten und die Faserenden an den Kanten des Faserverbundwerkstoffes frei. Um eine Diffusion von Feuchtigkeit in die Schnittkanten zu vermeiden müssen diese im Bedarfsfall noch versiegelt werden, was einen zusätzlichen Mehraufwand an Material und Bearbeitungszeit in der Fertigung darstellt.

Ein weiterer Nachteil bekannter Verfahren liegt darin, dass im Fall einer zu großen Toleranz zwischen dem eingelegten Preform und dem Werkzeugrand bei der Injektion die niedrigviskose reaktive Komponente an der Werkzeugwand voreilen kann. Als Folge wird dann im Preform i.d.R. Luft eingeschlossen.

Mit einer neuen endkontur- bzw. endabmessungsnahen Fertigung, auch als "Near-Netshape"-Technologie bezeichnet, verfolgt man das Ziel konturgetreue Preforms herzustellen, die der Endkontur des Bauteils soweit entsprechen, dass zeitaufwändige und sehr kostenträchtige Nachbearbeitungsschritte vermieden werden können. Um einen stabilen und reproduzierbaren RTM-Prozess zu erreichen, muss sichergestellt sein, dass die Ausgangsparameter immer dieselben sind. Neben den rheologischen Eigenschaften der Matrix ist vor allem die Beschaffenheit des Preforms hinsichtlich Geometrie und Permeabilität relevant. Dies wird zum einen durch ein automatisiertes endkonturnahes Preforming erreicht. Weitere Vorteile der "Near-Netshape"-Bauweise ergeben sich durch eine erhebliche Reduzierung nachgeschalteter Bearbeitungsverfahren, wie Konturfräsen und Schnittkantenversiegelung.

Neue Technologien setzen dabei an, das textile Preform vorab fein zu beschneiden. Dabei wird das umgeformte Textil nach dem Preform-Prozess beispielsweise mit einem Laser zugeschnitten und mit einer engen Toleranz in die Form gelegt. Dieses vom DLR entwickelte und auch als "Evo RTM" bezeichnete Verfahren zur Fertigung komplexer CFK-Strukturen als Endkonturnaher Volumenbauteile in hohen Stückzahlen ist jedoch in hohem Maße aufwändig und daher nur für vergleichsweise geringere Stückzahlen geeignet, wie sie beispielsweise in der Luftfahrtindustrie zu finden sind.

Ferner sind spezielle Textiltechnologien aus dem Stand der Technik bekannt, welche einen definierten Kantenabschluss des Preforms ermöglichen.

Als eine Möglichkeit zur Verbesserung in der Fertigung von RTM-Bauteilen ist aus der DE 696 07 445 T2 bzw. EP 0 780 213 B1 ein Verfahren bekannt. Dieser Ansatz soll auch eine Lösung gegen die Gefahr des Voreilens der reaktiven Komponente an Werkzeugkanten und damit des Einschließens von Luft in dem herzustellenden Werkstück dadurch bieten, dass nach dem Einlegen eines trockenen Vorformlings ein thermisch aktivierbarer, quellfähiger Klebstoff zwischen der Spritzgießform und dem Vorformling längs wenigstens eines Randes des herzustellenden Bauteils angebracht und nach dem Schließen der Spritzgießform durch Aufheizen des gesamten Werkzeugs aktiviert wird. Erst anschließend wird Harz in die geschlossene Form eingebracht und polymerisiert, so dass der aufgequollene, polymerisierte Klebstoff integraler Bestandteil des fertigen Bauteils ist. Das Bauteil zeigt jedoch insbesondere in einem Bereich einer Werkzeugtrennebene in Form des polymerisierten Klebstoffs ohne Faserzusatz gänzlich andere mechanische Parameter, als sie das übrige RTM-Bauteil zeigt.

Eine automatisierte Fertigung flächiger Bauteile, wie z.B. PKW-Dächer, Kotflügel oder Motorhauben ist bereits Stand der Technik. Der Automatisierungsbedarf bei der Herstellung von FKV-Bauteilen ist zunehmend kostengetrieben, jedoch sind auch Reproduzierbarkeit, rückverfolgbare und robuste Prozesse bei bester Ausnutzung des Leichtbaupotentials Treiber für eine vollständige Automatisierung.

Aus den vorstehend genannten Bereich ist durch die US 5,034,173 A1 ein Verfahren zur Herstellung einer Kfz-Tür mit einem verstärkten Fensterrahmen offenbart, bei dem gemäß einem zwei Phasen umfassenden RIM-Verfahren ein Glasfaserverstärktes Kunststoff-Teil hergestellt wird. Zur Bildung einer Oberfläche werden ein hochviskoses Harz RRIM und ein niederviskoses Harz SRIM aufeinander folgend in eine die Glasfaser-Verstärkung umschließende Form eingebracht. Während das hochviskose Harz RRIM sich nur an Endbereichen mit der Glasfaser-Verstärkung verbindet, sie aber nie umfassend durchdringt und auch kein optisch hinreichendes Abbild der Oberfläche der umschließenden Form bilden kann, sind ausreichend Räume vorhanden, in die das nachfolgend eingespritzte niederviskose Harz SRIM zur Erzeugung einer geschlossenen Oberfläche des gesamten Bauteils eindringen kann. Das niederviskose Harz SRIM läuft aber auch darüber hinaus, so dass nach einer Fertigstellung einer Kfz-Tür gemäß diesem Verfahren eine Nachbearbeitung mit Entfernung von Graten aus polymerisiertem niederviskosem Harz erforderlich ist.

Die WO 2014/076227 A2 offenbart ein Verfahren zum Herstellen eines hochbelastbaren Kunststoff-Bauteils unter Verwendung eines textilen Gebildes oder eines Preforms. Zunächst wird ein erster Kunststoff eingespritzt und ausgehärtet, nach diesem Schritt ein textiles Gebilde in dessen Werkzeug eingelegt und mit einer zweiten Formmasse überspritzt. Ein solches Verfahren stellt hohe Ansprüche an die Werkzeugdichtigkeit. Alternativ erfordert es eine Endkonturnachbearbeitung der entstehenden Bauteile.

Aus der WO 2011/072739 A1 ist ebenfalls ein Verfahren eines zur Herstellung eines hochbelastbaren Kunststoff-Bauteils unter Verwendung eines Textils bekannt. Das Herstellungsergebnis (Bauteil) dieses Verfahrens muss gegebenenfalls hinsichtlich seiner Endkontur nachbearbeitet werden.

Die vorliegende Erfindung hat das Ziel, ein Verfahren zur endkonturgetreuen Herstellung von mechanisch hoch belastbaren Kunststoff-Bauteilen zu schaffen, das die vorstehend genannten Nachteile bekannter Verfahren insbesondere in Bezug auf eine aufwändige Nachbearbeitung mildert und zugleich eine Belastbarkeit auch eines Bereiches um eine Werkzeugtrennebene herum zu erhöhen.

Diese Aufgabe wird erfindungsgemäß durch ein Verfahren mit den Merkmalen des Anspruchs 1 gelöst. Bei diesem Verfahren wird zunächst in einem ersten Schritt in einem geschlossenen Werkzeug aus einer Matrize und einer Patrize ein Spritzgieß-Vorgang mit einer thermoplastischen Formmasse durchgeführt, bei dem eine thermoplastische Formmasse mit hoher Viskosität verwendet wird, um eine hinreichende Abdichtung des Werkzeuges bzw. der Kavität in der Werkzeugtrennebene zwischen Matrize und Patrize gegenüber einer anschließend in einem zweiten Schritt verwendeten niedrigviskosen Formmasse K2 zu schaffen, wobei vor dem zweiten Schritt die Kavität des Werkzeugs so vergrößert wird, dass nach dem Einspritzen und Aushärten der sehr niedrigviskosen Formmasse eine durch die thermoplastische Formmasse gebildete Abdichtung soweit an bzw. in der sehr niedrigviskosen Formmasse fixiert ist, dass sie ein Verbundbauteil bilden. Dieses Verfahren ist dadurch gekennzeichnet, dass vor dem ersten Schritt ein zu imprägnierendes trockenes textiles Gebilde oder ein zu imprägnierender Preform in das Werkzeug eingelegt wird und eine Umspritzung des trockenen textilen Gebildes oder des Preforms mit dem thermoplastischen Kunststoff K1 derart erfolgt, dass das textile Gebilde oder der Preform teilweise oder vollständig durch den Kunststoff K1 umsäumt und rahmenartig fixiert wird.

In einem ersten Schritt wird in dem geschlossenen Werkzeug ein Spritzgieß-Vorgang mit einer thermoplastischen Formmasse durchgeführt, bei dem eine thermoplastische Formmasse mit hoher Viskosität verwendet wird, um eine hinreichende Abdichtung der des Werkzeuges bzw. der Kavität in der Werkzeugtrennebene zwischen Matrize und Patrize gegenüber der in einem zweiten Schritt in das Werkzeug eingespritzten sehr niedrigviskosen Formmasse zu schaffen. Das sich so ergebende Verbundbauteil kann aufgrund der Tatsache, dass sich ein Anteil von thermoplastischem Kunststoff auf eine enge Zone an einer Werkzeugtrennebene bzw. -Trennlinie konzentriert, näherungsweise statt als Verbundbauteil von den mechanischen Eigenschaften her auch weiter einheitlich als duroplastisches Bauteil betrachtet werden. Zudem weist der saumartige Dichtbereich am fertigen Bauteil mindestens die mechanischen Eigenschaften des eingesetzten ersten Kunststoffs bzw. der thermoplastischen Formmasse auf.

Erfindungsgemäß lässt sich demnach mit der Kombination der Prozesse zur Verarbeitung von reaktiven Formmassen mit dem Spritzgießen thermoplastischer Formmassen ein Spritzgießwerkzeug auch in einer Werkzeug-Trennebene sehr gut abdichten. Das vergleichsweise hochviskose thermoplastische Material verhindert hierbei die Bildung eines Grates, der nach Erhärten einer niedrigviskosen Formmasse und dem Öffnen des Werkzeugs nachzubearbeiten wäre. Ein sich gemäß dem vorstehend beschriebenen Verfahren ergebendes Bauteil zeichnet sich damit dadurch aus, dass es im Bereich einer Werkzeugtrennebene zwischen Matrize und Patrize von einem thermoplastischen Rand umsäumt ist. Hierdurch wird einerseits eine i.d.R. ausreichende Konturgenauigkeit des fertigen Bauteils auch im Bereich einer Werkzeugtrennebene schon mit der Entnahme aus dem Werkzeug erzielt, anderseits sind etwaige Nachbearbeitungen an einem thermoplastischen Werkstoff wesentlich einfacher und kostengünstiger durchführbar, also vorstehend mit Blick auf einen duroplastischen Werkstoff beschrieben.

Gemäß der Erfindung wird ein eingelegtes trockenes Textil bzw. ein Preform durch den thermoplastischen Kunststoff in einem ersten Schritt zunächst in Form und Lage fixiert. Der zuerst verwendete thermoplastische Kunststoff bildet neben der Funktion als rahmenförmige Dichtung in der Werkzeugtrennebene quasi einen Rahmen, in dem das Textil fixiert ist. Im Gegensatz zu der konventionellen RTM-Technik wird bei einem erfindungsgemäßen Verfahren damit auch eine Abdichtung des Werkzeuges gegenüber der sehr niedrigviskosen Formmasse zur Imprägnierung der Textilstruktur bzw. deren Einzelfilamente im Werkzeug durch eine weitere Komponente aus thermoplastischen Kunststoff, welche in einem ersten Schritt verspritzt wird, erreicht. Zur Abdichtung einer Kavität in der Werkzeugtrennebene gegenüber einem eingespritzten thermoplastischen Material kann auf bekannte Ansätze der Werkzeugfertigung zurückgegriffen werden. Zusätzliche Maßnahmen zur Abdichtung, insbesondere das Einlegen von Dichtschnüren etc. sind damit entbehrlich. Die Kombination aus der Injektion thermoplastischer und reaktiver Formmassen an sich ist bereits bekannt und wird beispielsweise zur Beschichtung von Thermoplastbauteilen eingesetzt. Die Kombination zur Nutzung der ersten Komponente als Fixierung einer eingelegten textilen Preforms, der anschließend mit einer weiteren niedrigviskosen Formmasse imprägniert ist, ist erst auf Basis einer der vorliegenden Erfindung zugrunde liegenden Erkenntnis möglich, wonach aufgrund der hohen Viskosität eine Imprägnierung des textilen Preforms durch den thermoplastischen Kunststoff jedoch nicht oder nur sehr begrenzt möglich ist, so dass maximal die ersten zwei bis drei Filamentschichten an der Oberfläche des Preforms vollständig von der thermoplastischen Kunststoffmasse ummantelt werden können. Der umlaufende Rand des Bauteils wird demnach komplett mit thermoplastischen Material umspritzt, um nachfolgend zur Abdichtung der Kavität gegenüber der vergleichsweise sehr viel dünnflüssigeren Reaktivkomponente verwendet zu werden.

Vorteilhafte Weiterbildungen sind Gegenstand der Unteransprüche. Demnach wird ein Vergrößern der Kavität vorzugsweise durch Verstellen mindestens eines beweglichen Blocks oder durch Zuordnung der Patrize zu einer anderen Matrize oder einen analogen Wechsel durchgeführt. Bei der Alternative mit einem Wechsel der Matrize ist jedoch darauf zu achten, dass eine Zuordnung einer zweiten Matrize mit definierten Prägekanten zur formschlüssigen Abdichtung der Kavität erfolgt. Eine Dicke eines zu verprägenden Materials der thermoplastischen Abdichtung sollte dabei ca. 0,2 - 0,3 mm betragen, d.h. eine definierte Prägekante an der zweiten Matrize sollte eine Tiefe von ca. 0,2 - 0,3 mm bei einer Breite von etwa 1 mm bis 2 mm aufweisen.

Vorteilhafter Weise wird in einer bevorzugten Ausführungsform der Erfindung eine Gas-Injektion in das thermoplastische Material vorgesehen. Damit wird die Viskosität des thermoplastischen Materials herabgesetzt, so dass neben einer Einsparung an thermoplastischem Material auch mit geringeren Einspritzdrücken gearbeitet werden kann.

Ein Ziel der vorliegenden Erfindung besteht darin, über eine exakte Herstellung und eine exakte Ablage eines Preform in dem betreffenden Werkzeug eine Toleranzgrenze von etwa 0,1 mm Unterschied zwischen Preform und Werkzeugkavität einzuhalten, um damit auch nachfolgende Nachbearbeitungen überflüssig zu machen. Dazu wird der textile Einleger oder Preform so gestaltet, dass er innerhalb enger Toleranzgrenzen von ca. 0,5 - etwa 1,0 mm in einer Kavität des Werkzeugs platziert werden kann. Zur Fertigung von Preforms aus unterschiedlichen Materialien selber wird auf die Offenbarungen der WO 99/12733 A1 und US 7247212 A verwiesen. Es ist weiterhin in einer Ausführungsform der Erfindung vorgesehen, das textile Gebilde bzw. den Preform unter Verwendung spezieller Elemente, wie zum Beispiel Nadeln oder Klemmschieber, in der geöffneten Kavität in seiner Lage so zu fixieren, dass ein ungewolltes Verrutschen oder Verschieben des Einlegers z.B. beim Schließen des Werkzeuges vermieden werden kann.

Gemäß einer bevorzugten Ausführungsform der Erfindung bildet der eingelegte Preform oder das Textil zum Rand der Kavität hin einen definiert einstellbaren Spalt, der an dem Fließweg/Wanddickenverhältnis des zu verarbeitenden Thermoplasts sowie an der Angusssituation orientiert eingestellt wird.

Erfindungsgemäß erfolgt die Umspritzung des trockenen Textils in einem ersten Schritt mit dem thermoplastischen Kunststoff derart, dass das Textil teilweise oder vollständig durch Kunststoff umsäumt wird.

In einer Ausführungsform der Erfindung werden Rippen und andere Funktionselemente des späteren Bauteils, bei denen die mechanischen Eigenschaften eines kurzglasfaserverstärkten thermoplastischen Kunststoff-Materials ausreichen, ebenfalls direkt auf das Textil angespritzt, das als Einleger von sich aus nur zur Ausbildung ebener Strukturen fähig ist und nicht zu der von Funktionselementen.

In einer bevorzugten Ausführungsform der Erfindung erfolgt ein Verprägen/Verpressen des nach dem Einbringen des Thermoplasts gebildeten umlaufenden Dichtrandes über ein Maschinenprägen oder werkzeugintegrierte Prägetechnik. Dadurch kann die Schrumpfung des Thermoplastsystems ausgeglichen werden, wobei zugleich eine vollständige Abdichtung gewährleistet wird. Dieser Prägevorgang wird in einer weiteren Variante des Verfahrens mit der Injektion der Imprägnierungskomponente überlagert, um eine bessere Entlüftung des Systems zu ermöglichen.

In einem weiteren Verfahrensschritt gemäß der Erfindung kann dann in der gleichen oder in einer neuen Kavität eine weitere niedrigviskose Komponente, der Imprägnierungskomponente, injiziert, mit der der textile Einleger imprägniert wird. Dazu wird über einen separaten Angusspunkt eine weitere Kunststoffkomponente verwendet, insbesondere eine reaktive Formmasse mit vorzugsweise ähnlichen chemischen Eigenschaften wie die zuvor eingespritzte thermoplastische Formmasse. Die geringe Viskosität ermöglicht eine Imprägnierung und weitgehend vollständige Durchdringung des textilen Preforms und härtet anschließend über eine chemische oder physikalische Reaktion in der geschlossenen Form aus. Durch das zuvor stattfindende teilweise oder vollständige Umsäumen des trockenen Textils mit einer thermoplastischen Komponente wird das trockene Textil während dieses Schrittes weiterhin wie durch einen Rahmen in der Kavität fixiert, was ein Verschieben des Textiles beim anschließenden Injizieren einer reaktiven Formmasse verhindert. Somit können deutlich schnellere Injektionsgeschwindigkeiten der reaktiven Formmasse realisiert werden, als sie in einem Standard RTM-Prozess bekannt sind.

Die Fließfront der Imprägnierungskomponente endet an dem Bauteilrand an dem zuvor angespritzten thermoplastischen Dichtrand. Über eine zusätzliche Verprägung des thermoplastischen Kunststoffes kann eine vollständige Dichtheit erreicht werden, was von der Anmelderin in ihrem sog. ColorForm-Verfahren mit nachgeschalteter Lackierung eines thermoplastischen Trägers mit einem 2K-Lacksystem in einem geschlossenen Werkzeug bereits gezielt eingesetzt wird und damit auch im Rahmen der vorliegenden Erfindung für den Fachmann anwendbar ist. Damit ist eine vollständige Automatisierung der Entformung des Bauteils und damit des ganzen Prozesses möglich. Es wird keine zusätzliche manuelle Reinigungsarbeit in der Form notwendig.

In einer alternativen Variante des Verfahrens wird in einer separaten Kavität ausschließlich die Rippenstruktur aus thermoplastischen Material gespritzt und ausgehärtet. Die Form wird geöffnet und das soweit fertiggestellte Bauteil verbleibt in einer Formhälfte. Dieser Formhälfte wird nun eine dritte Formhälfte zugeordnet, mit welcher sich eine Kavität für die Teilstruktur ausbilden kann. In die vorgesehene Kavität wird ein trockenes Textil in die dafür vorgesehene Kavität des Spritzgießbauteils eingelegt und anschließend wird die Form mit Hilfe einer dritten Werkzeughälfte geschlossen. Dabei wird aufgrund der gewählten Toleranzen der Formhälften die Schwindung des Thermoplasts berücksichtigt, so dass im Dichtungsbereich des Werkzeugs eine Presspassung zwischen dem Werkzeugstahl und der thermoplastischen Kunststoffkomponente erfolgt. Anschließend wird in die entstandene Kavität, in der sich das trockene Textil befindet, ein niedrigviskoser Kunststoff injiziert. Der Vorteil der alternativen Variante liegt darin, dass der textile Einleger in dem Bereich der Kontaktstellen mit der Komponente K2 nicht kompaktiert bzw. zusammengedrückt wird. Durch eine Kompaktierung und Verdichtung des Textilmaterials können unterschiedliche Permeabilitäten entstehen, die zu einem unregelmäßigen Füllprozess mit nicht vollständiger Imprägnierung des Textilmaterials führen.

Nachfolgend werden weitere Merkmale und Vorteile erfindungsgemäßer Ausführungsformen unter Bezugnahme auf Ausführungsbeispiele anhand der Zeichnung näher erläutert. Darin zeigen in schematischer Darstellung:
- Figur 1:: eine Schnittdarstellung durch ein Werkzeug zur Herstellung eines mechanisch hoch belastbaren Kunststoff-Bauteils in Form eines Faserverbundbauteils in einem Mehrkomponenten-Spritzgießverfahren;
- Figur 2:: eine Schnittdarstellung nicht erfindungsgemäßen weiteren Ausführungsbeispiels;
- Figur 3:: eine Schnittdarstellung analog der Abbildung von Figur 2 zur Darstellung eines Werkzeugwechsels und
- Figur 4:: die Schnittdarstellung von Figur 3 zur Darstellung eines letzten Verfahrensschrittes.

Über die verschiedenen Abbildungen hinweg werden für gleiche Elemente stets die gleichen Bezugszeichen verwendet. Ohne Beschränkung der Erfindung wird nachfolgend zeichnerisch nur auf Varianten zur Herstellung von Faserverbundbauteilen eingegangen, wobei zumindest ein textiler Einleger mit einem sehr niederviskosen duroplastischen Kunststoff zur Ausbildung eines möglichst engkonturnahen Bauteils imprägniert wird.

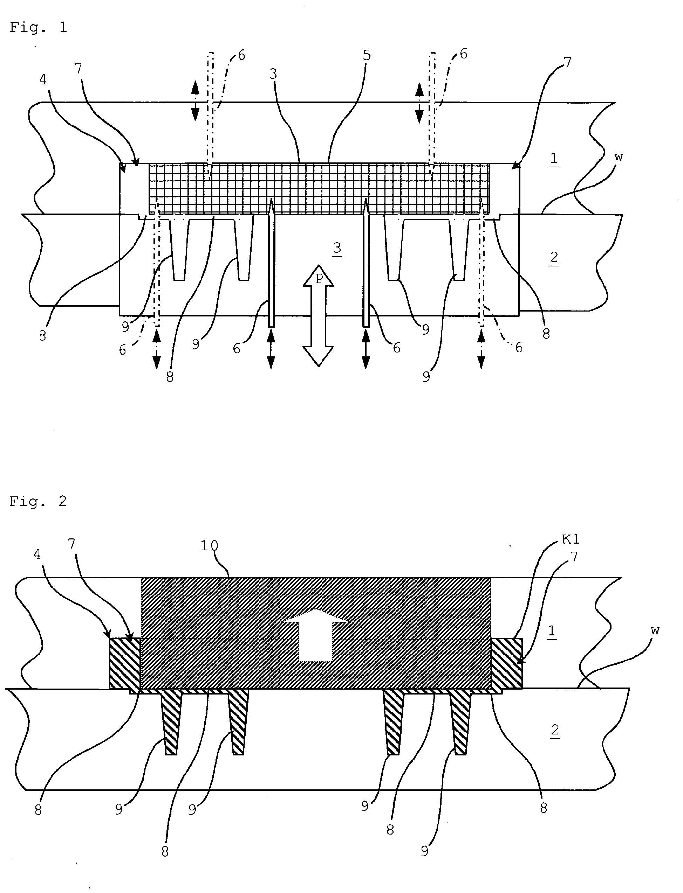

Ein erstes Ausführungsbeispiel zeigt in der Abbildung von Figur 1 ein Faserverbundbauteil als Beispiel für ein mechanisch hoch belastbares Kunststoff-Bauteil, das mit Hilfe des Mehrkomponenten-Spritzgießverfahrens hergestellt wird. Das Formwerkzeug besteht dabei aus einer Matrize 1 und einem Gegenstück, einer Patrize 2. Matrize 1 und Patrize 2 bilden im geschlossenen Zustand des Werkzeugs miteinander eine Werkzeugtrennebene w.

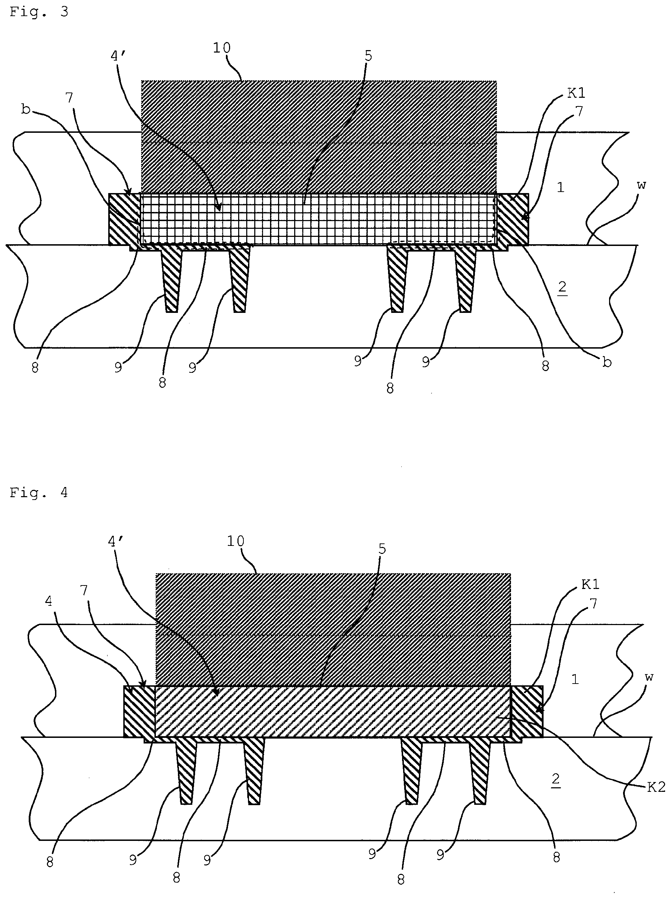

Die Patrize 2 selbst kann in einer Variante des Verfahrens einen in Richtung des Pfeils P beweglichen Kern 3 besitzen, der ein Verprägen/Verpressen der Komponenten zulässt, wie in der Abbildung von Figur 1 angedeutet. Hierdurch wird eine auch nachfolgend noch unter Bezugnahme auf eine entsprechende funktionale Erweiterung der Matrize 1 ermöglichte Veränderung einer Kavität 4 bzw. Schaffung einer vergrößerten Kavität 4' beschrieben, siehe Figuren 2 und 3.

Im geschlossenen Zustand bilden die zwei Formhälften mindestens eine Kavität 4. In diese Kavität 4 wird entweder ein textiler Preform, der in einem vorherigen Schritt hergestellt wurde, oder ein entsprechendes textiles Gebilde 5 eingelegt und die Form geschlossen.

Über optionale werkzeugintegrierte Fixierungselemente 6, die im vorliegenden Beispiel beweglich gelagert sind, wird ein Verschieben oder Verrutschen des Textileinlegers bzw. des textilen Gebildes 5 verhindert. Diese optionalen Elemente 6 sind hier nadelförmig ausgebildet. Sie können in der Matrize 1 und/oder der Patrize 2 vorgesehen sein. Derartige Vorrichtungen sind dem Fachmann auch in Form von Halteklammern etc. seit langer Zeit gekannt und werden daher als Mittel der Wahl hier nicht weiter ausgeführt.

Zum Rand der Kavität 4 hin bildet der Textileinleger 5 mit dem Formwerkzeug aus Matrize 1 und Patrize 2 einen Leerraum 7. Beim Einlegen eines Textils in die erste Kavität des Spritzgießwerkzeugs sollte ein Rand zwischen Textileinleger und Werkzeugkavität von 2-3 mm eingehalten werden. Damit können auch größere Bauteile sicher gefüllt werden.

Hier wird der Leerraum 7 über mindestens einen nicht weiter dargestellten Anspritzpunkt mit einer thermoplastischen Kunststoffkomponente K1 gefüllt. Eine Anzahl von Anspritz- bzw. Angusspunkten für die thermoplastische Komponente K1 ist der Fließfähigkeit eines betreffenden Kunststoffs anzupassen. Ein Fließweg/Wanddicken-Verhältnis von 100 - 150 sollte eingehalten werden.

Für die erste Komponente K1 geeignete spritzgießfähige Substrate sind leicht fließende Thermoplaste mit einer scherratenabhängigen Viskosität von ca. 10 - 150 Pa*s. Insbesondere kommen hier technische Kunststoffe wie Polyamide mit Glasfaser- oder Kohlenstofffaserverstärkung in Betracht, mit denen im ersten Verfahrensschritt Schichtdicken von ca. 2 mm im Bereich der Werkzeugtrennebene w aufgebaut werden. Durch einen zusätzlichen physikalischen Schäumprozess kann die Viskosität des Kunststoffs weiter herab gesetzt und zudem die Formfülldrücke reduziert werden, um eine Verschieben eines Textileinlegers auch bei sehr kleinen Randkavitäten zu vermeiden.

Ferner sind im vorliegenden Beispiel in der Kavität 4 zusätzlich daran anschließende Rippen 9 und andere Fließweghilfen 8 vorgesehen, die ein gleichmäßiges Füllen der Form sowie ein teilweises Umschließen des Textileinlegers bzw. des textilen Gebildes 5 ermöglichen und so einer weiteren Erhöhung der Festigkeit des herzustellenden Bauteils dienen. Insbesondere die Rippen 9 werden durch die thermoplastische Kunststoffkomponente K1 gebildet, die dazu auch faserverstärkt durch Beimischung kürzerer Glasfaser-Stücke erhalten kann. Einer nachfolgend eingespritzten Reaktivkomponente könnten hingegen keine Fasern beigemischt werden, da diese beim Durchdringend und Imprägnieren des textilen Gebildes 5 quasi herausgefiltert werden würden. Ein textiles Gebilde 5 kann derartige Rippen 9 prinzipiell nicht bilden, da es nur eher ebene Körper bilden kann.

Beim Einspritzen einer Kunststoffkomponente K1 werden die Hohlräume 7, 8 und 9 mit Kunststoffmasse gefüllt und härten zumindest teilweise aus. Diese Komponente K1 ist so beschaffen, dass sie in der Werkzeugtrennebene w zwischen Matrize 1 und Patrize 2 eine dem Stand der Technik entsprechende Abdichtung bewirkt und keine oder nur geringfügige weitere Nachbearbeitung des Bauteils nach dem Abschluss des Spritzprozesses notwendig ist, um eine hinreichende Konturtreue zu erzielen.

Der textile Einleger 5 wird beim Einspritzen der Kunststoffkomponente K1 dabei lediglich an den äußersten Filamentstrukturen von der Kunststoffkomponente K1 in einen gestrichelt angedeuteten Bereich einer Dicke b durchtränkt. Mit dem Erstarren der Kunststoffkomponente K1 ist der textile Einleger 5 von einer Art Rahmen umschlossen, der den textilen Einleger 5 in seiner Lage im geschlossenen Werkzeug gegen jedes Verrutschen ausreichend fixiert.

Anschließend findet nach einem Öffnen des Formwerkzeugs ein Wechsel von zumindest einer Werkzeughälfte statt, während das soweit vorbereitete Bauteil z.B. in der Patrize verbleibt. Es folgt eine Zuordnung einer zweiten Matrize mit definierten Prägekanten zur formschlüssigen Abdichtung der Kavität 4, 4'. Das zu verprägende Material sollte dabei ca. 0,2 - 0,3 mm in der Tiefe und ca. 1 bis 2 mm in der Breite betragen. Nun folgt das Einspritzen der zweiten, niedrigviskosen Komponente K2 und die Imprägnierung der Textilstruktur 5 mit K2, wobei sich die Kunststoffe K1 und K2 stoffschlüssig zu einem Verbundbauteil verbinden, das von einem thermoplastischen Rand aus K1 umsäumt ist. Das Entformen des fertigen Bauteils schließt das Verfahren ab.

Für eine Imprägnierung eines textilen Einlegers als zweite Komponente K2 geeignete Kunststoffe oder Harze sind z.B. Polyurethansysteme, Epoxidharzsysteme und In-Situ-Polymerisationssysteme, wie z.B. Guss-PA, Guss-PMMA, Guss-PBT, mit geringen Anfangsviskositäten von ca. 5-100 mPa*s. Die in nicht vollständiger Aufzählung genannten Kunststoffe oder Harze eignen sich damit auch für die Imprägnierung von dichten Textilfasermatten. Für die Herstellung von unverstärkten oder kurzfaserverstärkten Bauteilen können hingegen auch Harze mit Viskositäten von ca. 100-1000 mPa*s eingesetzt werden. Aufgrund der vorherrschenden Innendrücke insbesondere bei der Imprägnierung von dichten Textilmatten ist eine vollständige Abdichtung der Kavität in der Trennebene mit einer Stahl-Stahl Paarung eines Werkzeugs außerhalb eines erfindungsgemäßen Verfahrens nicht möglich.

Während der Injektion der reaktiven Formmasse K2 kann nun durch eine Prägebewegung des Kerns 3 eine Dichtigkeit des thermoplastischen Bauteils so gesteuert werden, dass einerseits während der Einspritzbewegung eine Entlüftung der Kavität 4 zur Trennebene hin ermöglicht wird und dass andererseits beim Erreichen der Fließfront die Kavität 4 durch ein Verpressen der thermoplastischen Kunststoffkomponente K1 vorzugsweise im elastischen Bereich stattfindet und so eine vollständige Dichtheit der Kavität 4 erreicht wird.

In einem nicht erfindungsgemäßen Ausführungsbeispiel wird ein Faserverbundbauteil mittels der Mehrkomponententechnik hergestellt, wobei die Verfahrensschritte wie folgt ablaufen:
Das Formwerkzeug besteht gemäß der Abbildung von Figur 2 aus einer ersten Matrize 1 und einer Patrize 2. Diese bilden zusammen eine Kavität 4. Die Matrize 1 weist einen beweglichen Kern 10 auf, durch den eine jeweilige Größe und Form der Kavität 4 einstellbar ist, wie nachfolgend noch beschrieben wird.

Gemäß einer in diesem Ausführungsbeispiel dargestellten Option ist diese Kavität 4 wiederum mit bestimmten Geometrien zur Erstellung von verschiedenen Funktionselementen wie Fließweghilfen 8 und Rippen 9 oder Versteifungselementen o.ä. versehen. Derartige konstruktive Maßnahmen zur gezielten Erhöhung einer Steifigkeit eines Bauteils etc. können durch eine Textilstruktur 5 allein an einem Faserverbundbauteil nicht vorgenommen werden. Dagegen ist eine Realisierung durch die Kavität 4 mit Anbindung an die Textilstruktur 5 und die imprägnierende Duroplast-Komponente K2 über die thermoplastische Komponente K1 mit großen Freiheitsgraden in der technischen Gestaltung vorteilhafterweise möglich.

Nach dem Schließen der beiden Werkzeughälften 1 und 2 wird in den entstehenden Hohlraum eine Kunststoffkomponente K1 eingespritzt und ausgehärtet. Diese Komponente ist so beschaffen, dass in der Werkzeugtrennebene w eine dem Stand der Technik entsprechende Abdichtung ermöglicht wird und keine oder nur geringfügige weitere Nachbearbeitung nach dem Spritzprozess notwendig ist. Diese Komponente K1 stellt später den Dichtrand zur elastischen Abdichtung der Kavität 4 gegenüber einem nachfolgend eingespritzten niedrigviskosen Kunststoffmaterial K2 dar.

In einem zweiten Schritt wird das Werkzeug gemäß der Abbildung von Figur 3 geöffnet und der Patrize 2 wird eine zweite Matrize 1' zugeordnet, hier wird jedoch der Kern 10 in der Matrize 1 derart verschoben, dass sich eine neue Kavität 4' ausbildet. In die so entstandene neue Kavität 4' wird nun ein trockenes textiles Gebilde 5 eingelegt, siehe Figur 3.

Mit dem Schließen der Werkzeughälften 1 oder 1' und 2 findet eine Abdichtung der Formteilkavität auf dem Kunststoffmaterial K1 statt. Die Toleranzen werden dabei so gewählt dass beim Schließen der Form eine ausreichende Abdichtung gegenüber nun eingespritzten Kunststoffen K2 mit geringer Viskosität bei Werkzeuginnendrücken von heute bis zu 150 bar erreicht wird.

Anschließend kann in die nun abgedichtete Kavität 4' eine niedrigviskose Formmasse K2 eingespritzt werden, siehe Figur 4. Mit dieser Komponente findet die Imprägnierung der Textilstruktur 5 in dem Werkzeug statt. Die Formmasse K2 härtet in dem Werkzeug aus. Anschließend wird das fertige Bauteil bei geöffnetem Werkzeug entformt.

Optional wird an dieser Stelle in nicht weiter in den Abbildungen darstellbarer Weise der Füllvorgang mit der Komponente K2 mit einem Prägeprozess überlagert, der beispielsweise auch über den Kern 10 gesteuert werden kann. Hierdurch wird die Entlüftung der Kavität 4' bei geringem zusätzlichen Aufwand gesteuert.

In einer nicht weiter dargestellten nicht zur Erfindung gehörenden Alternative wird das anhand der Figuren 2 bis 4 dargestellten Verfahren ohne Einlegen eines trockenen textilen Gebildes 5 durchgeführt. Es ist damit in einem ersten Schritt durch das Material K1 eine konturgetreue Dichtung hergestellt worden, die nachfolgend mit einem duroplastischen Material K2 weitgehend so umschlossen wird, dass sich nach dem Aushärten der Komponente K2 ein endkonturgetreues und mechanisch hoch belastbares Verbundbauteil ergibt.

Durch die beiden vorstehend beispielhaft beschriebenen Verfahren werden folgende Vorteile erzielt:
- deutlich höherer Formfreiheitsgrad durch Spritzgießprozess im Vergleich zu RTM;
- Einsatz kostengünstiger Halbzeuge durch die Verwendung trockener nicht vorimprägnierter Textilien;
- sehr hohes Leichtbaupotential durch die Kombination aus stofflicher und struktureller Leichtbauweise;
- keine Gefahr eines sog. Washout bei der Injektion der reaktiven Komponente aufgrund verbesserter Dichtigkeit in der Werkzeugtrennebene;
- keine Gefahr des Voreilens der reaktiven Komponente an Werkzeugkanten und damit des Einschließens von Luft in dem herzustellenden Werkstück;
- kein oder nur sehr geringer Aufwand bei einer Nachbearbeitung eines fertigen Bauteils im Bereich der ehemaligen Werkzeugtrennebene.

### Bezugszeichenliste

- 1: Matrize
- 2: Patrize
- 3: Kern
- 4: Kavität
4' Kavität (durch Verschiebung des Kerns 10 erzeugt)
- 5: textiles Gebilde
- 6: Fixierungselemente
- 7: Leerraum / Spalt
- 8: Fließweghilfe
- 9: Rippe
- 10: beweglicher Kern
(oder zweite Matrize mit Kavität 4')

- b: Eindringtiefe K1 in das textile Gebilde 5
- w: Werkzeugtrennebene zwischen Matrize 1 und Patrize 2
- K1: Kunststoffkomponente
- K2: niedrig viskose Formmasse
- P: Pfeil einer Richtung einer Bewegung eines beweglichen Kerns 3

## Patentansprüche

1. Verfahren zur endkonturgetreuen Herstellung mechanisch hoch belastbarer Kunststoff-Bauteile, bei dem in einem ersten Schritt in einem geschlossenen Werkzeug aus einer Matrize (1, 1') und einer Patrize (2) ein Spritzgieß-Vorgang mit einer thermoplastischen Formmasse (K1) durchgeführt wird, bei dem ein thermoplastische Formmasse (K1) mit hoher Viskosität verwendet wird, um eine hinreichende Abdichtung des Werkzeuges bzw. der Kavität (4) in der Werkzeugtrennebene (w) zwischen Matrize (1, 1') und Patrize (2) gegenüber einer in einem zweiten Schritt verwendeten sehr niedrigviskosen Formmasse (K2) zu schaffen, wobei vor dem zweiten Schritt die Kavität (4) so vergrößert wird, dass nach dem Einspritzen und Aushärten der sehr niedrigviskosen Formmasse (K2) die durch die Formmasse (K1) gebildete Abdichtung soweit an bzw. in der Formmasse(K2) fixiert ist, dass sie ein Verbundbauteil bilden, wobei vor dem ersten Schritt ein zu imprägnierendes trockenes textiles Gebilde (5) oder ein zu imprägnierender Preform in das Werkzeug eingelegt wird und eine Umspritzung des trockenen textilen Gebildes (5) oder des Preforms mit dem thermoplastischen Kunststoff (K1) derart erfolgt, dass das textile Gebilde (5) oder der Preform teilweise oder vollständig durch den Kunststoff (K1) umsäumt und rahmenartig fixiert wird.

2. Verfahren nach dem vorhergehenden Anspruch, **dadurch gekennzeichnet, dass** ein Vergrößern der Kavität (4) durch Verstellen mindestens eines beweglichen Blocks (10) oder durch Zuordnung der Patrize (2) zu einer anderen Matrize (1') oder einen analogen Wechsel durchgeführt wird.

3. Verfahren nach einem der vorhergehenden Ansprüche, **dadurch gekennzeichnet, dass** eine Gas-Injektion in das thermoplastische Material (K1) verwendet wird.

4. Verfahren nach Anspruch 1 bis 3, **dadurch gekennzeichnet, dass** das eingelegte textile Gebilde (5) zum Rand der Kavität hin einen definiert einstellbaren Leerraum oder Spalt (7) bildet, der an einem Verhältnis von Fließweg zu Wanddickenverhältnis des zu verarbeitenden Thermoplasts (K1) sowie an der vorliegenden Angusssituation des Werkzeugs orientiert eingestellt wird.

5. Verfahren nach dem vorhergehenden Anspruch, **dadurch gekennzeichnet, dass** ein Verprägen/Verpressen eines in dem Spalt (7) nach dem Einbringen des Thermoplasts (K1) gebildeten umlaufenden Dichtrandes über ein Maschinenprägen oder werkzeugintegrierte Prägetechnik erfolgt.

6. Verfahren nach dem vorhergehenden Anspruch, **dadurch gekennzeichnet, dass** der Prägevorgang mit der Injektion der Imprägnierungskomponente (K2) überlagert wird.

7. Verfahren nach Anspruch 1, **dadurch gekennzeichnet, dass** Rippen (9) und andere Funktionselemente des späteren Bauteils ebenfalls direkt auf das textile Gebilde (5) angespritzt werden.

8. Verfahren nach Anspruch 1, **dadurch gekennzeichnet, dass** das textile Gebilde (5) unter Verwendung spezieller Elemente, wie zum Beispiel Nadeln (6) oder Klemmschieber, in der geöffneten Kavität in seiner Lage fixiert ist, um ein ungewolltes Verrutschen oder Verschieben des textilen Gebildes (5) zu verhindern.

9. Verfahren nach einem der vorhergehenden Ansprüche, **dadurch gekennzeichnet, dass** die Toleranzen der Formhälften unter Berücksichtigung der Schwindung des Thermoplasts (K1) derart gewählt werden, dass im Dichtungsbereich des Werkzeugs eine Presspassung zwischen dem Werkzeugstahl und der thermoplastischen Kunststoffkomponente (K1) erfolgt.

## Claims

1. A method for producing plastic components, which have a high mechanical load-bearing capacity with a correct final contour, in the case of which an injection molding process is carried out in a first step in a closed tool consisting of a female mold (1, 1') and of a male mold (2), by means of a thermoplastic molding compound (K1), in the case of which a thermoplastic molding compound (K1) of high viscosity is used in order to create a sufficient seal of the tool or of the cavity (4), respectively, in the tool parting plane (w) between female mold (1, 1') and male mold (2) as compared to an extremely low-viscous molding compound (K2) used in a second step,
wherein, prior to the second step, the cavity (4) is enlarged such that, after the injection and curing of the extremely low-viscous molding compound (K2), the seal formed by the molding compound (K1) is fixed to or in the molding compound (K2), respectively, to the extent that they form a composite component, wherein, prior to the first step, a dry textile formation (5) to be impregnated or a preform to be impregnated is placed into the tool, and an overmolding of the dry textile formation (5) or of the preform with the thermoplastic plastic (K1) takes place in such a way that the textile formation (5) or the preform is partly or completely surrounded by the plastic (K1) and is fixed in a frame-like manner.

2. The method according to the preceding claim, **characterized in that** an enlargement of the cavity (4) is carried out by adjusting at last one movable block (10) or by assigning the male mold (2) to another female mold (1') or an analogous change.

3. The method according to one of the preceding claims, **characterized in that** a gas injection into the thermoplastic material (K1) is used.

4. The method according to claims 1 to 3, **characterized in that** the inserted textile formation (5) forms an empty space or gap (7), which can be adjusted in a defined manner towards the edge of the cavity and which is adjusted so as to be oriented towards a ratio of flow path to wall thickness ratio of the thermoplast (K1) to be processed as well as towards the present gate situation of the tool.

5. The method according to the preceding claim, **characterized in that** an embossing/pressing of a circumferential sealing edge formed in the gap (7) after the introduction of the thermoplast (K1) takes place via a machine embossing or tool-integrated embossing technique.

6. The method according to the preceding claim, **characterized in that** the embossing process is superimposed with the injection of the impregnating component (K2).

7. The method according to claim 1, **characterized in that** ribs (9) and other functional elements of the later component are also injection molded directly onto the textile formation (5).

8. The method according to claim 1, **characterized in that** the position of the textile formation (5) is fixed in the open cavity by using special elements, such as, for example, needles (6) or push-pull devices, in order to prevent an unintentional shifting or displacing of the textile formation (5).

9. The method according to one of the preceding claims, **characterized in that** the tolerances of the mold halves are chosen in such a way in consideration of the shrinkage of the thermoplast (K1) that a press fit between the tool steel and the thermoplastic plastic component (K1) takes place in the sealing area of the tool.

## Revendications

1. Procédé permettant de fabriquer avec précision quant à leur contour final des pièces en matière plastique pouvant supporter des contraintes mécaniques élevées, dans lequel, dans une première étape dans un outil fermé composé d'une matrice (1, 1') et d'une matrice négative (2), un procédé de moulage par injection avec une masse à mouler (K1) thermoplastique est exécuté, dans lequel une masse à mouler (K1) thermoplastique à viscosité élevée est employée pour créer un calfeutrage suffisant de l'outil, respectivement de la cavité (4) dans le plan de séparation de l'outil (w) entre la matrice (1, 1') et la matrice négative (2) par rapport à une masse à mouler (K2) à très faible viscosité employée dans une seconde étape,
dans lequel la cavité (4) est ainsi agrandie avant la seconde étape qu'après l'injection et le durcissement de la masse à mouler (K2) à très faible viscosité, le calfeutrage formé par la masse à mouler (K1) est fixé sur, respectivement, dans la masse à mouler (K2) à tel point qu'elles forment une pièce composite, dans lequel avant la première étape, une formation textile sèche (5) à imprégner ou une préforme à imprégner est insérée dans l'outil et une injection de la formation textile sèche (5) ou de la préforme avec le plastique (K1) thermoplastique est effectuée de telle façon que la formation textile (5) ou la préforme est bordée partiellement ou intégralement par le plastique et fixée à la manière d'un cadre (K1).

2. Procédé selon la revendication précédente, **caractérisé en ce qu'**un agrandissement de la cavité (4) est effectué par déplacement d'au moins un bloc mobile (10) ou par attribution de la matrice négative (2) à une autre matrice (1') ou un changement analogue.

3. Procédé selon l'une des revendications précédentes, **caractérisé en ce qu'**une injection de gaz est employée dans la matière thermoplastique (K1).

4. Procédé selon revendications 1 à 3, **caractérisé en ce que** la formation textile (5) insérée forme en direction du bord de la cavité, un espace vide ou une fente (7) défini(e) réglable qui est réglé(e) de façon orientée sur un rapport du trajet d'écoulement au rapport d'épaisseur de paroi du thermoplastique (K1) à traiter ainsi que sur la situation d'alimentation de matière de l'outil.

5. Procédé selon la revendication précédente, **caractérisé en ce qu'**un marquage/une compression d'un bord d'étanchéité périphérique formé dans la fente (7) après l'introduction du thermoplastique (K1) est effectué(e) par un marquage machine ou une technique de marquage intégrée dans l'outil.

6. Procédé selon la revendication précédente, **caractérisé en ce que** la procédure de marquage est superposée avec l'injection de la composante d'imprégnation (K2).

7. Procédé selon revendication 1, **caractérisé en ce que** des nervures (9) et d'autres éléments fonctionnels de la future pièce sont injecté(e)s également directement sur la formation textile (5).

8. Procédé selon revendication 1, **caractérisé en ce que** la formation textile (5) est fixée dans sa position dans la cavité ouverte par l'emploi d'éléments spéciaux, comme par exemple des aiguilles (6) ou des mécanismes de poussage et tirage, pour empêcher un glissement ou un déplacement non souhaité de la formation textile (5) .

9. Procédé selon l'une des revendications précédentes, **caractérisé en ce que** les tolérances des moitiés de moule sont choisies en tenant compte du retrait du thermoplastique (K1) de telle sorte que dans la zone de calfeutrage de l'outil, un ajustage serré est effectué entre l'acier à outil et la composante de plastique thermoplastique (K1).
